# EUROPEAN PATENT APPLICATION

(11) **EP 2 274 998 A1**
(43) Date of publication of application: **19.01.2011**
(21) Application number: 10169290.3
(22) Date of filing: 12.07.2010
(51) Int. Cl.: A45C 13/00, A45C 11/00, H04M 1/18, A45C 11/38, A45C 7/00, G06F 1/16, H04B 1/38

(54) **Protective cover**

(30) Priority: 12.07.2009 US 224906 P
(71) Applicant: SA Shuang, Richmond, BC V6V 1W5 (CA)
(72) Inventor: SA Shuang, Richmond, BC V6V 1W5 (CA)
(74) Representative: Rooney, John-Paul

(57) **Abstract**

The embodiments relate to a protective cover case (1) for hermetically sealing an article having a body section and a contoured section. The protective cover case (1) includes a body portion (10) defining an internal chamber for receiving the article and an access opening (16a) allowing the article to pass therethrough. The body portion (10) is formed of an elastic material and capable of snuggly fitting onto at least a portion of the body section of the article. The protective cover case (1) also includes a contoured portion (20) fixedly joined to the body portion (10). The contoured portion (20) is configured to receive and accommodate the contoured section of the article. The protective cover case (1) is capable of hermetically sealing the enclosed article after the access opening (16a) on the body portion (10) is sealed.

## Description

### Cross-Reference to Related Application

This patent application claims priority from U.S. Provisional Patent Application No. 61/224,906 filed July 12, 2009.

### Field of the Invention

The invention relates generally to a cover case that hermetically seals an article enclosed in the cover case and protects the enclosed article. In particular, the invention relates to a cover case that hermetically seals the enclosed article, such as an electronic or optical device, and allows operation of the sealed device as intended.

### Background of the Invention

Portable electronic or optical devices have been become popular in the recent years allowing users to carry the electronic or optical devices to various locations and/or use the same under various conditions. For example, mobile phones are commonly used by construction personnel at various outdoor worksites. Due to the outdoor working conditions, such mobile phones are exposed to raining or snowing weather conditions, which can adversely affect the service life of such electronic devices.

Various cover cases have been used to protect various portable electronic or optical devices. For example, cover cases are provided as storage cases for electronic or optical devices. However these storage cases are designed and intended to use with electronic or optical devices when such device are not in use. Users typically have to retrieve the electronic or optical devices from the storage cases before using such electronic or optical devices.

Other cover cases are provided allowing the user to access the electronic or optical devices enclosed in the cover cases. For example, the cover case can have an access opening allowing the user to reach inside the cover case and manipulate the electronic or optical device enclosed therein. In such a case, the user operates the electronic or optical device from inside of the cover case. In order to facilitate the user's operation of the enclosed electronic or optical device, the cover case is typically designed to leave sufficient room to accommodate the user's hand(s) during the operation of the enclosed electronic or optical device.

It is therefore desirable to provide an improved protective cover case that is capable of hermetically sealing an article enclosed in the cover case. Additionally or alternatively, it is desirable to provide an improved protective cover case that simplifies user's operation of an electronic or optical device enclosed in the cover case.

### Summary of the Invention

The invention relates generally to a protective cover case that hermetically seals an article enclosed in the cover case and protects the enclosed article. The protective cover case includes a body portion defining an internal chamber for receiving the article and an access opening allowing the article to pass therethrough. The body portion is formed of an elastic material and capable of snuggly fitting onto at least a portion of the body section of the article.

The protective cover case also includes a contoured portion fixedly joined to the body portion. The contoured portion is configured to receive and accommodate the contoured section of the article. The protective cover case is capable of hermetically sealing the enclosed article after the access opening on the body portion is sealed.

The invention also relates to a method of hermetically sealing an article having a body section and a contoured section. The method comprises providing a protective cover case, such as that described above, wherein the elongated sleeve portion of the protective cover case is in a collapsed position. The method also comprises the following: passing the contoured section of the article through the access opening on the collapsed elongated sleeve portion to be received in the contoured portion; extending the collapsed elongated sleeve portion over the body section of the article so that the protective cover case is in its extended position; and closing the accessing opening on the elongated sleeve portion to hermetically seal the article inside the protective cover case.

### Brief Description of the Drawings

The following description is set forth in connection with the attached drawing figures, which are not necessarily to scale, emphasis instead generally being placed upon illustrating the principles of the invention. In the drawing figures:
Fig. 1A is a perspective view of a cover case formed according to a first embodiment;
Fig. 1B is a second perspective view of the cover case shown in Fig. 1A;
Fig. 2 is a side view of the cover case shown in Fig. 1A;
Fig. 3 is a top view of the cover case shown in Fig. 1A;
Fig. 4 is a bottom view of the cover case shown in Fig. 1A;
Fig. 5 is an end view of the cover case shown in Fig. 1A;
Fig. 6 is an opposite end view of the cover case shown in Fig. 1A;
Fig. 7 is a perspective view of the contoured portion of the cover case shown in Fig. 1A;
Fig. 8 is a longitudinal cross sectional view of the cover case shown in Fig. 1A together with an enclosed article;
Fig. 9 is a longitudinal cross sectional view of a cover case according to a second embodiment together with an enclosed article; and
Fig. 10 is a perspective view of a cover case according to a third embodiment.

### DETAILED DESCRIPTION OF THE EMBODIMENTS

Various embodiments of the cover case 1 are described below in connection with the drawing figures. In the following description of different embodiments, similar components are designated with the same numeral references and redundant description is omitted.

The cover case 1 described herein is formed to enclose an article 2, such as various portable electronic and optical devices, and prevent the enclosed article 2 from being in contact with dust, moisture, gas, chemicals, germs, or other impurities or contamination. In particular, the cover case 1 can hermetically seal the enclosed article 2, such as an electronic or optical device 2, while allowing the sealed article 2 to carry out its intended operation. The cover case 1 has a body portion 10 joined to one or more contoured portions 20 to seal an article 2 therein.

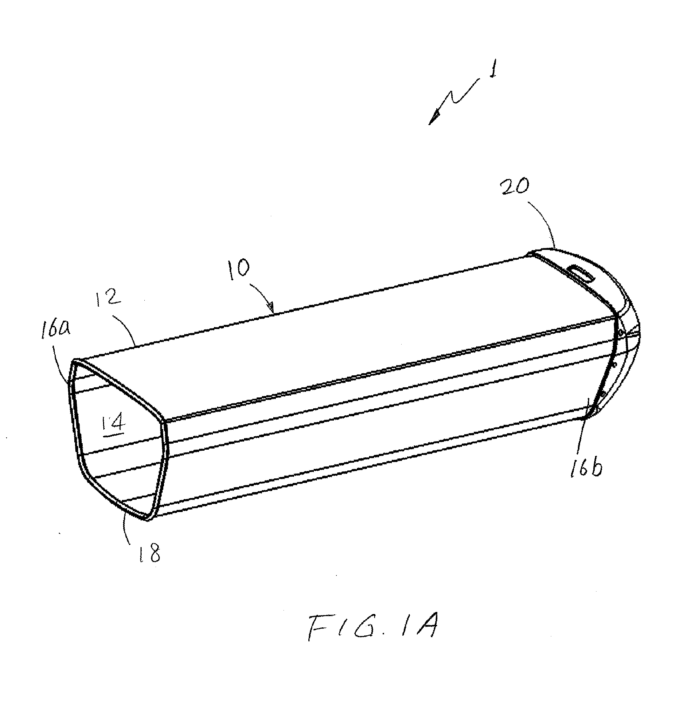

The body portion 10 of the cover case 1 is formed by a flexible wall 12. In its extended position as is shown in Fig. 1A, the flexible wall 12 defines an internal chamber 14 for receiving an article 2 to be sealed in the cover case 1. The extended flexible wall 12 allows the body portion 10 to accommodate and fit around the sealed article 2. One end of the body portion 10 has an access opening 16a allowing the article 2 to enter or exit the internal chamber 14 formed by the flexible wall 12. A connecting area 16b is provided at an opposite end of the body portion 10 from the access opening 16a. The connecting area 16b can be either a closed end or an open end sealed by a contoured portion 20 as will be described below.

The flexible wall 12 of the body portion 10 can deform or otherwise be manipulated during packaging, storage, and normal operation of the cover case 1. For example, the flexible wall 12 can be collapsed into a compact or flattened state. In one example, the two ends of the flexible wall 12 can be bought toward each other so that the flexible wall 12 changes into a collapsed position before fitting onto the article 2. In another example, the flexible wall 12 shown in Fig. 1A can be rolled up from the access opening 16a toward the opposite end of the flexible wall 12 where the connecting area 16b is located. Such a collapsed state of the flexible wall 12 can reduce storage spaces and/or facilitate the sealing operation of the underlying article 2 as will be described in detail below.

In one example, a rim edge 18 is formed at the access opening 16a of the body portion 10 to facilitating in changing the flexible wall 12 between an extended position as shown in Fig. 1A and a collapsed position and in handling the cover case 1 during the packaging and normal sealing operation of the cover case 1. For example, the rim edge 18 can be formed to have a circular shape and used as a guide to roll up the flexible wall 12 from the access opening 16a toward and to the opposite end on the flexible wall 12. The rim edge 18 can also assist in unrolling the flexible wall 12 during the sealing operation as is described below.

Various materials can be used to form the flexible wall 12 of the body portion 10. In one example, the flexible wall 12 can be made of an elastic or stretchable material to allow the body portion 10 to be manipulated to accommodate the configuration of the enclosed article 2 and snuggly fit around the enclosed article 2. For example, the flexible wall 12 can be made of one or more of rubber, latex, and silicone materials. The flexible wall 12 of the body portion 10 can be stretched to cover the article 2 to be sealed during the sealing operation. After the stretched body portion 10 fits onto the enclosed article 2, the flexible wall 12 can return to its unstretched state and snuggly fit around the sealed article 2 to conform to its contour. Additional materials can also be used for the same purpose.

Additionally or alternatively, the flexible wall 12 of the body portion 10 is formed of a material that is airtight, waterproof, or contamination proof, so as to block dirt, moisture, gas, chemicals, germs, or other impurities or contamination from passing therethrough. In another example, the flexible wall 12 is made of a material that can endure various medical sterilizing processes, such as those employ alcohol, autoclave, and other sterilizing chemicals. In a still further example, the flexible wall 12 is made of an inexpensive material for manufacturing disposable type cover cases 1.

In an example where the cover case 1 is formed to seal an electronic or optical device 2, the flexible wall 12 is formed of a material that does not interfere the operation of the enclosed electronic or optical device 2. For example, the flexible wall 12 of the cover case 1 allows the passage of one or more of light, voice, sound, and electronic, radio, and/or other wireless signals. In one example, the flexible wall 12 is made of a material that allows a touch screen type of electronic device 2 to remain operable after being sealed in the cover case 1.

Exemplary materials for the flexible wall 12 can include, but are not limited to, silicone, latex, rubber, and plastic materials. Additional materials can also be used for the same purpose.

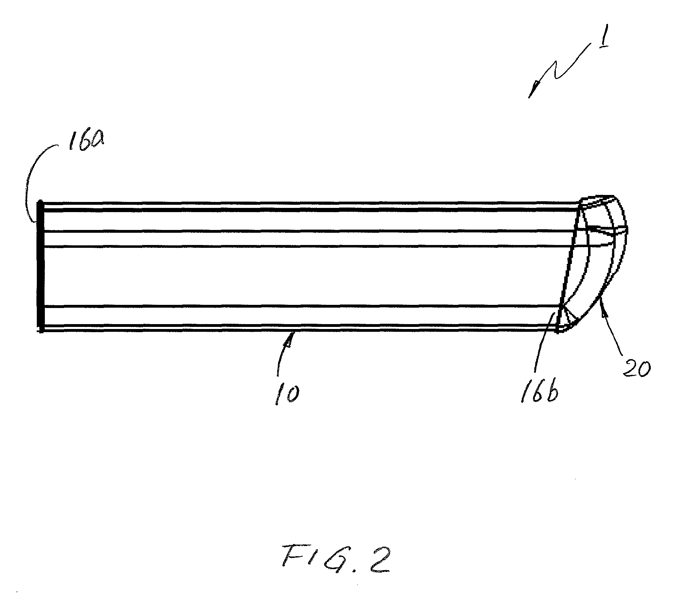

The contoured portion 20 of the cover case 1 is joined to the body portion 10 at a predetermined location on the body portion 10. According to a first variant, the contoured portion 20a can connect to the connecting area 16b of the body portion 10, either from outside of the body portion 10 as is shown in Fig. 2 or from inside the internal chamber 14. In the example illustrated in Fig. 1A, the interior 22 of the contoured portion 20a sealingly connects to an open connecting area 16b of the body portion 10 and closes at the connecting area 16b of the body portion 10. In such an example, the interior 22 of the contoured portion 20a communicates with the internal chamber 14 of the body portion 10 for enclosing a part of the article 2 to be sealed.

The contoured portion 20a can be configured to have a predetermined shape. In one embodiment, the interior 22 of the contoured portion 20a is configured to have a predetermined shape that is complementary to a portion of the article 2 to be sealed. The contoured portion 20a so formed can snuggly fit onto such portion of the article 2 during the sealing operation and after the article 2 is sealed in the cover case 1. In one example, the predetermined shape of the interior 22 can be formed by a molding process. Additionally or alternatively, the contoured portion 20a can be formed of a material that can retain a predetermined shape. Exemplary materials for the contoured portion 20a can include various rigid non-deformable materials (e.g., ABS plastics and polycarbonates) and deformable and elastic materials (e.g., TPU, PET, and PVC). Additional materials can also be used for the same purpose.

When a cover case 1 so formed is used to seal an article 2, the interior 22 of the contoured portion 20a can be fit onto at least a part of the article 2. In one example, the flexible wall 12 is collapsed before fitting the contoured portion 20a onto the article, such as by bringing the access opening 16a toward the opposite end of the body portion 10 and past the contoured portion 20a to expose its interior 22. After the contoured portion 20a is fit over the article 2, the flexible wall 12 can then be extended over the entire article 2 to thereby enclose the same. For example, the rolled up flexible wall 12 can be unrolled onto the article 2 so as to cover the entire article 2. As the flexible wall 12 is changed from the collapsed position to the extended position, the contoured portion 20a remains in place on the part of the article 2 to act as an anchor for the flexible wall 12.

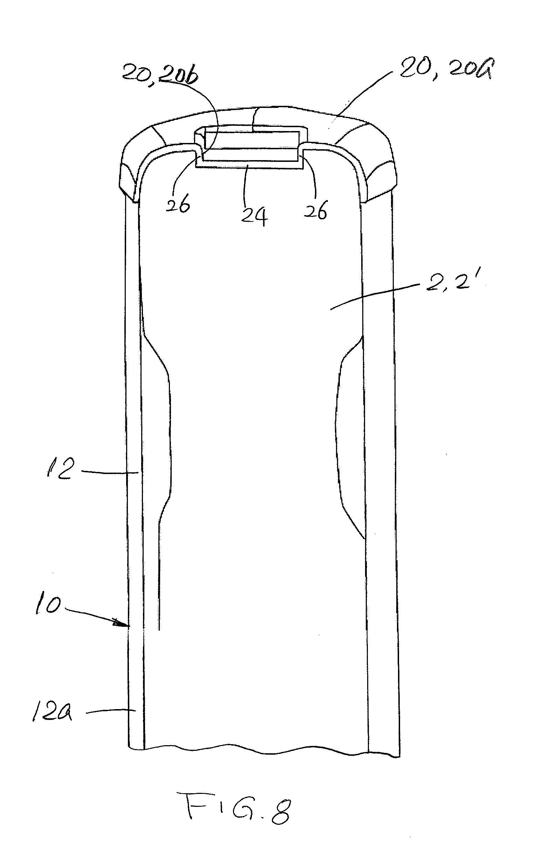

When the flexible wall 12 is extended to fully cover the article 2, as is shown in Fig. 8, the remaining portion 12a of the flexible wall 12 at its open end can be forced to gather, thereby closing the access opening 16a of the body portion 10 and sealing the article 2 inside the closed body portion 10. In one example, the remaining portion 12a of the flexible wall 12 hermetically seals the access opening 16a of the body portion 10. Additional fastening devices can be used to secure the closure of the gathered flexible wall 12 at its open end. For example, one or more of the following fastening devices can be used for this purpose: cable tie, rubber band, roll-wire, clip, knot, and/or adhesive material. In one example, a self-adhesive material is applied to the remaining portion 12a of the flexible wall 12 for sealing the body portion 10.

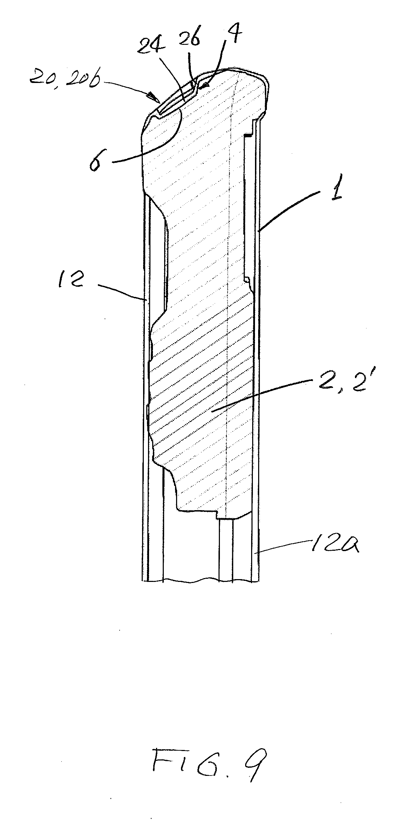

According to a second variant, the contoured portion 20b can be formed to fit into and/or around an optical port 4 of an optical device 2 to protect an optical component 6, such as an optical lens, inside the optical port 4. As is shown in Fig. 9, such an optical device 2 (e.g., an optical scanner 2') typically has an optical component 6 formed to sink into the optical port 4 to protect the optical component 6 from scratches or other damages during normal operation of the optical device 2. In such a case, the optical component 6 is indented from the remaining surface in which the optical port 4 is formed.

In one example, the contoured portion 20b can include an optical shield 24 to seal the optical component 6 of the optical device 2. The optical shield 24 can be formed to be transparent to the optical signal transmitted to or from the optical device 2 without deflection. In one example, the optical shield 24 can be formed by a part of the contoured portion 20b. For example, a part of the contoured portion 20b can be subjected to a polishing process to form smooth surfaces of the optical shield 24, thereby avoiding reflecting the optical signals. In another example, the optical shield 24 can be formed of a material, such as an optical glass material. Various other materials can also be used to form the optical shield 24.

The optical shield 24 can be formed in various shapes and sizes, such as to have substantially the same shape and size as those of the optical component 6. For example, the optical shield 24 can be in a substantially rectangular shape, as is shown in the various drawing figures, to fit over a rectangular optical component 6 in a scanning head 4 of an optical scanner 2', as is shown in Fig. 9. In an alternative example, the optical shield 24 can be formed in a substantially round shape to overlap with a camera lens similarly formed.

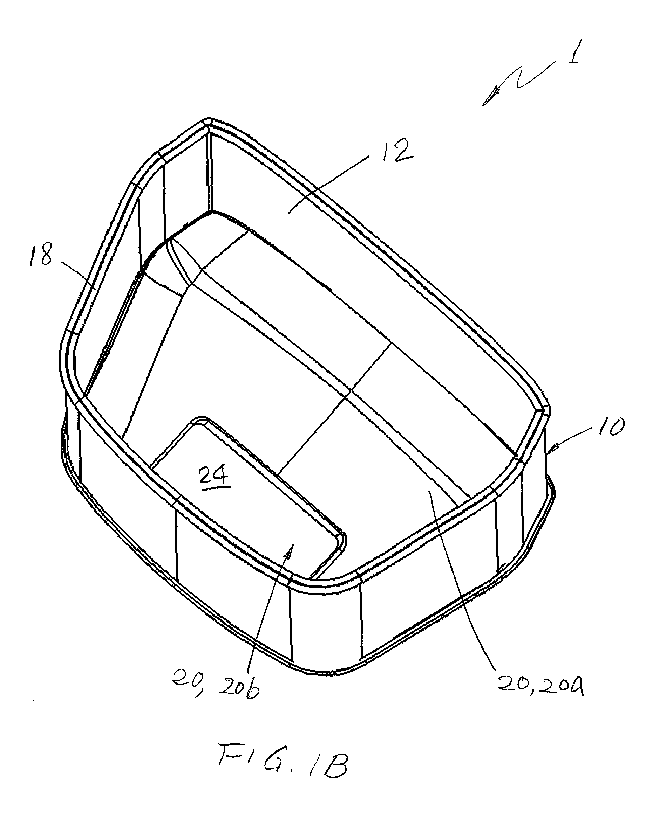

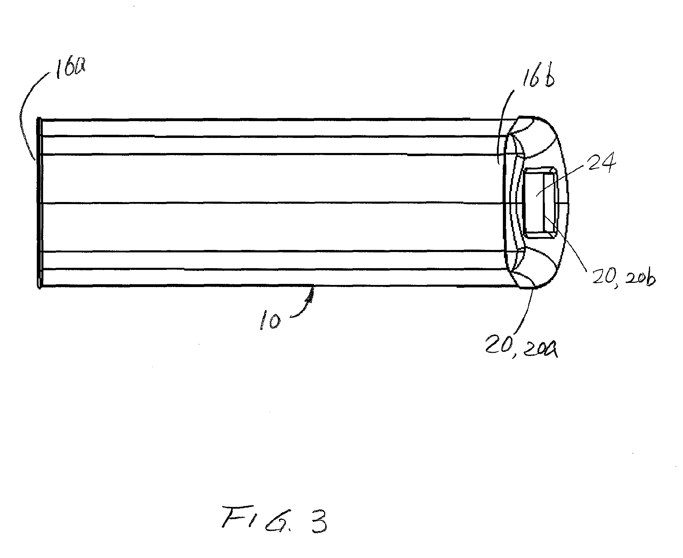

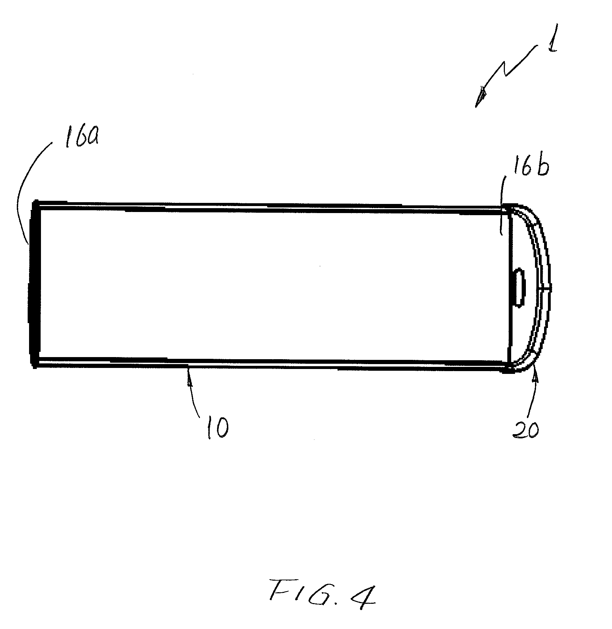

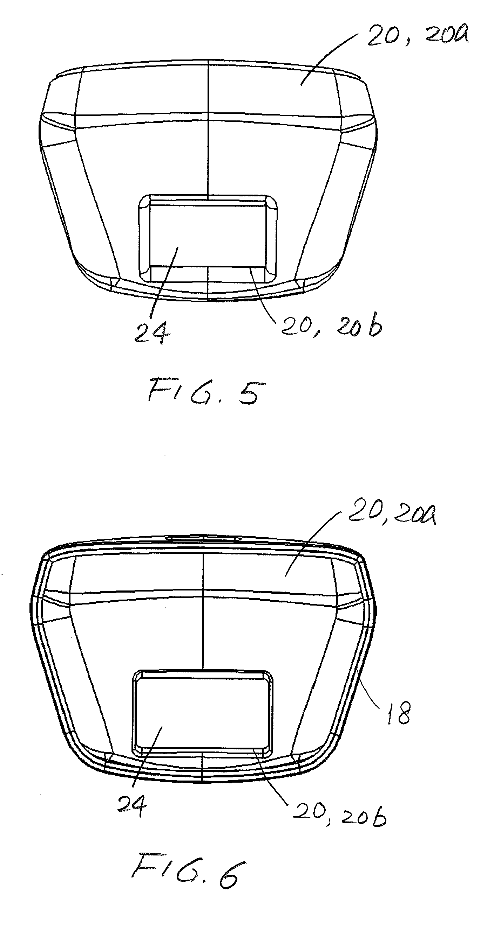

The optical shield 24 can be formed in various forms. In the examples shown in Figs. 1 to 9, a portion of the contoured portion 20b is recessed into the interior 22 to form the optical shield 24. The optical shield 24 so formed can be adapted to fit inside the optical port 4 on the optical device 2, when the cover case 1 is in the normal sealing position. In an alternative example, the optical shield 24 can be raised from the surrounding contoured portion 20b. Such an optical shield 24 can be adapted to fit outside and around the optical port 4 of the optical device 2, when the cover case 1 is in the normal sealing position. The optical shield 24 can be connected to the remaining contoured portion 20b by sidewalls 26.

The optical shield 24 is formed to be in close contact with the optical component 6 after the cover case 1 fits onto and seals the optical device 2. Such close contact can eliminate any gaps or additional materials left between the optical shield 24 and the optical component 6, which create reflection surfaces to interfere with or block the transmission of optical signals as exist in conventional optical device covers.

Various mechanisms can be used to ensure such close contact between the optical shield 24 and the optical component 6. For example, no part of the flexible wall 12 is left between the optical shield 24 and the optical component 6. Instead, an adhesive layer can be employed to promote adhesion between the optical shield 24 and the optical component 6. Additionally or alternatively, the sidewalls 26 supporting the optical shield 24 can be formed to have a reduced thickness. Such thinned sidewalls 26 can be deformed after being pressed into the optical port 4 to ensure the optical shield 24 to be in surface contact with the optical component 6.

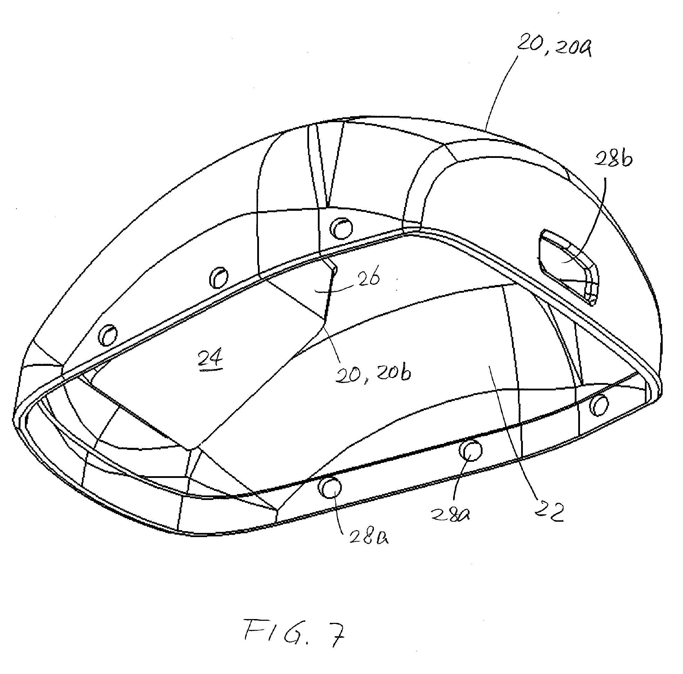

The optical shield 24 on the contoured portion 20b can be either integrally formed with or separately formed from the remaining contoured portion 20b. In the example shown in Figs. 7 and 9, the optical shield 24 is integrally formed with the remaining contoured portion 20b, such as through a molding process.

In another example, where the cover case 1 is formed to cover a mobile phone with a camera, the optical shied 24 can be separately formed from the remaining contoured portion 20b and connect thereto through a conventional thread design. For example, complementary threads can be formed respectively on the optical shield 24 and the optical port 4 of the contoured portion 20b. In one example, multiple interchangeable optical shields 24 can be selectively used to form the cover case 1. For example, the multiple optical shields 24 can be formed as different optical components with different optical functions, one of which can be selected to provide additional optical effect of the sealed optical device 2.

The contoured portion 20b formed according to the second variant can be used independently from or in combination with that formed according to the first variant. In the embodiment shown in Figs. 1 to 8, the contoured portions 20a, 20b formed according to the first and second variants are integrally formed as a single piece.

Alternatively, the contoured portions 20a, 20b formed according to the first and second variants can be spaced apart from each other on the body portion 10 and connected by the flexible wall 12. For example, in a cover case 1 used to seal a camera device, two separate contoured portions 20a, 20b can be provided and formed to conform respectively to a sidewall of the camera and to the camera lens portion. In such a case, the flexible wall 12 connected between the separate contoured portions 20a, 20b can be stretched to fit cameras of different sizes.

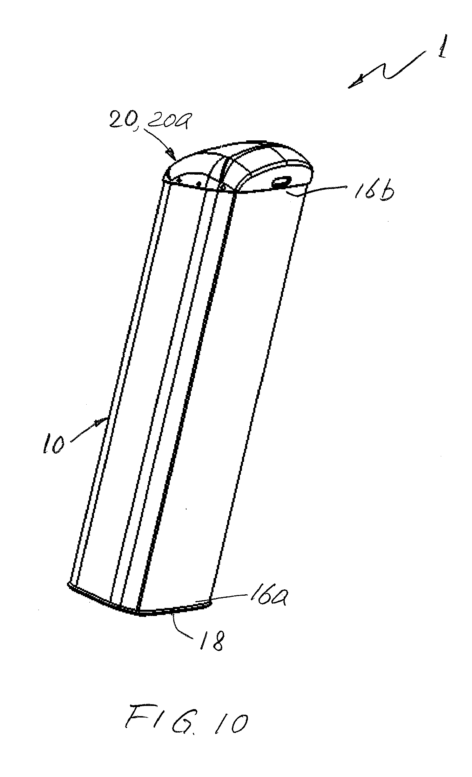

In further examples shown in Figs. 9 and 10, only one of the contoured portions 20a, 20b of the different variants is formed in the cover case 1.

Various methods and materials can be used to form the contoured portion 20. In one example, the contoured portion 20 can be formed thought a molding process, such as injection molding. For example, the contoured portion 20 can be molded using a plastic material, such as ABS, or PC. Where there is an optical shield 24, a portion of the contoured portion 20 can be subjected to a polishing process to form the optical shield 24. The contoured portion 20 can be formed by other materials including, but not limited to, metal, wood, glass, rubber, fabric, and silicone. In one example, the contoured portion 20 is made of a waterproof material. In another example, the contoured portion 20 is made of a material capable of protecting the enclosed article 2 from medical contamination.

The cover case 1 can be formed by connecting the contoured portion 20 with the body portion 10 with the aid of an adhesive material. In an alternative embodiment, the cover case 1 can be formed by incorporating the contoured portion 20 in a molding process for forming the body portion 10. For example, the body portion 10 can be molded onto a contoured portion 20 and thereby connected thereto. An injection molding process can be used for such a purpose. In addition, an adhesive material can be used to assist the connection between the contoured portion 20 and the body portion 10.

If desired, additional joining mechanism, such as one or more apertures 28a and/or cut-outs 28b, can be provided on the contoured portion 20, as shown in Fig. 7, to promote the connection of the contoured portion 20 and the body portion 10 through either a molding process or an adhesive material.

The cover case 1 described herein is capable of protecting the enclosed article 2 from environmental dust, moisture, gas, chemicals, germs, and/or other impurities or contamination. For example, the cover case 1 can hermetically seal an article 2. The various devices or equipment sealed in such cover cases 1 can be used under all-weather condition and/or in medical hazardous environment.

Although an optical scanner 2' is shown in Figs. 8 and 9, as an example of an electronic or optical device or article 2, the various embodiments are not limited to use with such optical scanner 2'. The cover cases 1 described herein can be configured to seal any of various handheld electronic or optical devices with or without operating systems (e.g., cell phones, radio, remote controller, data storage device, notebook, netbook, barcode scanner, medical deta collection device, personal data assistants (PDA), mobile computers, notebook computers, netbook computers, tablet computers, portable video games, MP3 players, digital cameras, video cameras, voice recorders, portable global positioning systems (GPS)) or other devices or equipment requiring isolation from dust, moisture, gas, chemicals, germs, and other impurities or contamination.

Thus, while there have shown and described and pointed out fundamental novel features of the invention as applied to a preferred embodiment thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A protective cover case for hermetically sealing an article having a body section and a contoured section, the protective cover case comprising:
a body portion defining an internal chamber for receiving the article and an access opening allowing the article to pass therethrough, the body portion being formed of an elastic material and capable of snuggly fitting onto at least a portion of the body section of the article;
a contoured portion fixedly joined to the body portion, the contoured portion being configured to receive and accommodate the contoured section of the article; and
a closure for sealing the access opening on the body portion;
wherein the protective cover case is capable of hermetically sealing the enclosed article after the closure seals the access opening on the body portion.

2. The protective cover case of claim 1, wherein the body portion comprises a flexible wall with stretchable material whereby the body portion can alter between an extended position for receiving the article and a collapsed position for minimizing storage space of the protective cover case.

3. The protective cover case of claim 1, wherein the body portion is an elongated sleeve having a free end portion including the access opening.

4. The protective cover case of claim 1, wherein the contoured portion is configured to snuggly fit onto the contoured section of the article.

5. The protective cover case of claim 1, wherein the contoured portion comprises a non-deformable material.

6. The protective cover case of claim 1, wherein the contoured portion comprises an optical shield configured to closely contact an optical component on the article.

7. The protective cover case of claim 6, wherein the optical shield joins the remaining contoured portion by a thinned sidewall, and wherein the thinned sidewall extending substantially perpendicular to the remaining contoured portion.

8. The protective cover case of claim 6, wherein the optical shield is separately formed from the remaining contoured portion and releasably joined thereto.

9. The protective cover case of claim 8, further comprising a plurality of optical shields each being separately formed from the remaining contoured portion and interchangeably joined thereto.

10. A protective cover case for hermetically sealing an article having a body section and a contoured section, the protective cover case comprising:
a contoured portion configured to receive and accommodate the contoured section of the article; and
an elongated sleeve portion having a first end fixedly joined to the contoured portion and a second end defining an access opening allowing the article to pass therethrough;
wherein the elongated sleeve portion is formed of an elastic material and capable of snuggly fitting onto at least a portion of the article; and
wherein the protective cover case is capable of hermetically sealing the enclosed article after the access opening on the body portion is sealed.

11. The protective cover case of claim 10, wherein the elongated sleeve portion is capable of altering between an extended position for receiving the article and a collapsed position for minimizing storage space of the protective cover case.

12. A method of hermetically sealing an article having a body section and a contoured section, the method comprising:
providing a protective cover case of claim 10, the elongated sleeve portion of the protective cover case being in the collapsed position;
passing the contoured section of the article through the access opening on the collapsed elongated sleeve portion to be received in the contoured portion;
extending the collapsed elongated sleeve portion over the body section of the article so that the protective cover case is in its extended position; and
closing the accessing opening on the elongated sleeve portion to hermetically seal the article inside the protective cover case.

13. The method of claim 12, wherein the protective cover case is rolled up from the second end to the first end into the collapsed position.

14. The method of claim 13, wherein the step of extending the collapsed elongated sleeve portion is carried out by unrolling the collapsed elongated sleeve portion.

15. The method of claim 12, wherein the step of closing the accessing opening on the elongated sleeve portion is carried out by tying the second end of the elongated sleeve portion into a knot.
